# EUROPEAN PATENT APPLICATION

(11) **EP 1 589 693 A1**
(43) Date of publication of application: **26.10.2005**
(21) Application number: 05252476.6
(22) Date of filing: 20.04.2005
(51) Int. Cl.: H04L 12/24

(54) **System and method for diffusing configuration data to distributed devices**

(30) Priority: 20.04.2004 US 829091
(71) Applicant: Agilent Technologies, Inc., Palo Alto, CA 94306 (US)
(72) Inventor: Eidson, John C., Palo Alto, California 94303 (US); Hamilton, Bruce, Menlo Park, California 94025 (US)
(74) Representative: Tollett, Ian

(57) **Abstract**

Techniques for diffusing configuration data to distributed devices 210-224 whose locations and movements vis-à-vis a measurement/control application may only be estimated statistically. Examples of distributed devices 210-224 whose locations and movements may only be estimated statistically include handheld devices and devices mounted on vehicles or other moving platforms. A measurement/control system according to the present techniques includes a configuration data source 200 that provides a set of configuration data that specifies a measurement/control function, and a set of distributed devices 210-224 each having means for obtaining the configuration data from the configuration data source 200 and means for diffusing the configuration data among the distributed devices 210-224.

## Description

The present invention relates to a measurement/control system and to a method for configuring a set of distributed devices.

A distributed measurement/control system may include a number of distributed devices that are capable of performing measurement functions and/or control functions. Examples of distributed devices that may be employed in a measurement/control system include a wide variety of sensor devices and a wide variety of actuator devices.

A distributed device may be configured by providing it with an appropriate set of configuration data. For example, a set of configuration data may specify a geographic location, a time, and/or other parameters for performing a measurement and/or control function.

Prior techniques for providing configuration data to distributed devices may employ direct communication paths to the distributed devices. For example an application controller in a measurement/control system may send configuration data to a set of distributed devices via a data bus or a communication network to which the distributed devices are attached.

Unfortunately, techniques for providing configuration data to distributed devices using direct communication paths may be impractical in some types of measurement/control systems. For example, a measurement/control system may employ potentially large numbers of distributed devices for which direct communication is impractical and/or expensive. In addition, a measurement/control system may employ mobile devices whose locations and movements may only be estimated statistically.

Techniques are disclosed for diffusing configuration data to distributed devices whose locations and movements vis-a-vis a measurement/control application may only be estimated statistically. Examples of distributed devices whose locations and movements may only be estimated statistically include handheld devices and devices mounted on vehicles or other moving platforms.

A measurement/control system according to the present techniques includes a configuration data source that provides a set of configuration data that specifies a measurement/control function, and a set of distributed devices each having means for obtaining the configuration data from the configuration data source and means for diffusing the configuration data among the distributed devices.

Other features and advantages of the present invention will be apparent from the detailed description that follows.

The present invention is described with respect to particular exemplary embodiments thereof and reference is accordingly made to the drawings in which:
**Figure 1** shows a measurement/control system according to the present teachings;
**Figure 2** illustrates an example of the diffusion of the configuration data into a measurement/control system;
**Figure 3** illustrates an example in which the configuration data source is co-located with a service provider;
**Figures 4a-4b** illustrates a device that may be configured using the present techniques;
**Figure 5** illustrates elements of a source kiosk in one embodiment.

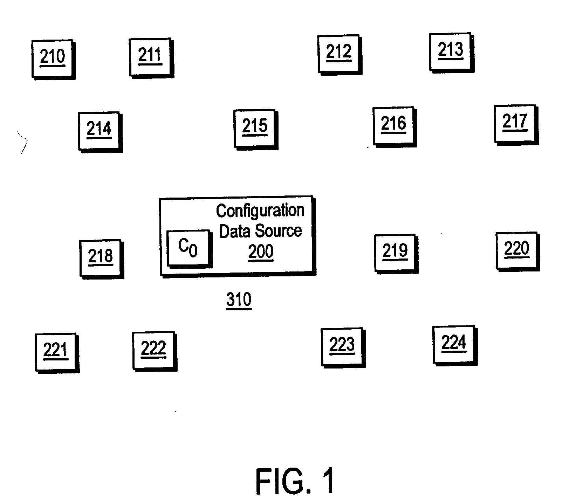

**Figure 1** shows a measurement/control system 310 according to the present teachings. The measurement/control system 310 includes a set of distributed devices 210-224 and a configuration data source 200. The configuration data source 200 and the distributed devices 210-224 include mechanisms for diffusing a set of configuration data C₀ throughout the measurement/control system 310.

The distributed devices 210-224 are each capable of performing a measurement/control function in response to the configuration data C₀. The distributed devices 210-224 may include large numbers of mobile devices, e.g. thousands or millions. Example embodiments for the distributed devices 210-224 include devices held or worn by individuals, e.g. cell phones, PDAs, portable game and media devices, calculators, etc, as well as vehicle mounted devices, e.g. devices in automobiles, aircraft including drones, water buoys, etc.

The configuration data C₀ may specify a set of boundaries within which a measurement/control function is to be performed. Given that the movements of the distributed devices 210-224 may be such that their locations may only be estimated statistically, the configuration data source 200 and the distributed devices 210-224 provide mechanisms for diffusing the configuration data C₀ among the distributed devices 210-224 so that, statistically, enough of the distributed devices 210-224 will obtain the configuration data C₀ and perform the desired measurement/control function in light of the boundaries specified in the configuration data C₀. For example, the configuration data C₀ may specify a geographic location at or within which a measurement/control function is to be performed and the configuration data C₀ is diffused so that it is likely that some of the distributed devices 210-224 will move into the specified geographic location and perform the desired measurement/control function in accordance with the configuration data C₀.

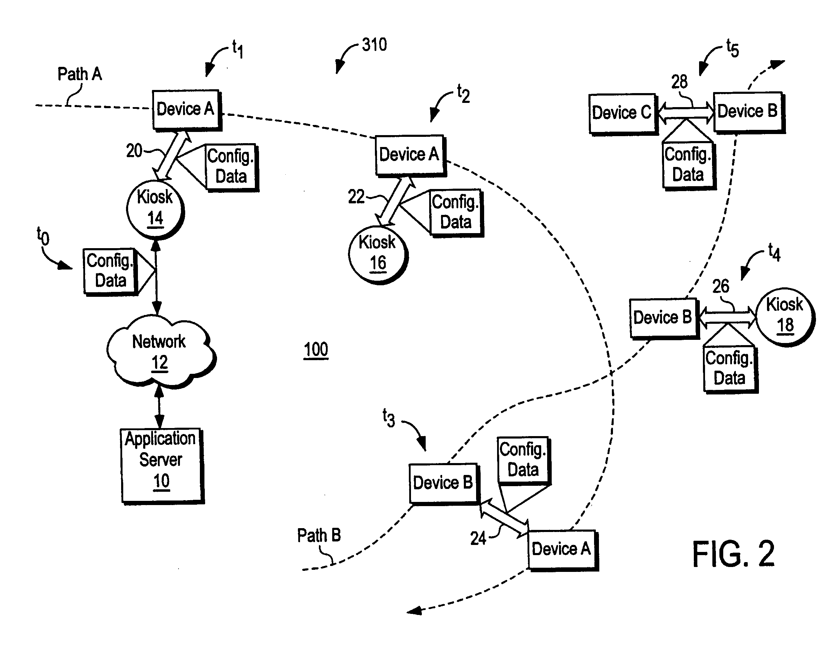

**Figure 2** illustrates an example of the diffusion of the configuration data C₀ into the measurement/control system 310. Three of the distributed devices 210-224, referred to as devices A-C, are shown. The device A moves along a path A and the device B moves along a path B in a geographic area 100.

The configuration data C₀ originates with an application server 10. For example, the application server 10 may be associated with a measurement/control application in the measurement/control system 310. In other embodiments, a measurement/control system may include a number of application servers.

The configuration data source 200 in this embodiment includes a source kiosk 14 that has a direct communication path to the application server 10 via a network 12. The application server 10 transfers the configuration data C₀ to the source kiosk 14 via the network 12. The measurement/control system 310 may include any number of source kiosks having direct communication with the application server 10.

The source kiosk 14 obtains the configuration data C₀ via the network 12 at time t₀ and internally stores the configuration data C₀. Thereafter, the source kiosk 14 passes the configuration data C₀ on to any of the devices A-C that establish a communication channel to the source kiosk 14. For example, at time t₁ the device A establishes a communication channel 20 to the source kiosk 14. The source kiosk 14 in response transfers the configuration data C₀ to the device A via the communication channel 20.

The device A after obtaining the configuration data C₀ from the source kiosk 14 continues on the path A. At time t₂, the device A reaches a diffusion kiosk 16, establishes a communication channel 22 to the diffusion kiosk 16, and then transfers the configuration data C₀ to the diffusion kiosk 16 via the communication channel 22. The diffusion kiosk 16 stores the configuration data C₀ internally so that it may provide the configuration data C₀ to other devices that may come into physical proximity with the diffusion kiosk 16.

The diffusion kiosk 16 may already have a set of configuration data stored internally when the communication channel 22 is established with the device A at time t₂. For example, the diffusion kiosk 16 may have a direct communication path to obtain the configuration data C₀ from the application server 10. In another example, the diffusion kiosk 16 may have obtained configuration data from another distributed device. The diffusion kiosk 16 and the device A may compare their respective internally stored configuration data to determine which to apply. Each set of configuration data may include a time-stamp and/or other indicator that may be used to determine its relative staleness in comparison to other configuration data.

For example, if a time-stamp in the configuration data C₀ is more recent than a time-stamp in the configuration data stored in the diffusion kiosk 16, then the configuration data C₀ supercedes the configuration data stored in the diffusion kiosk 16. On the other hand, if a time-stamp in the configuration data C₀ is specifies an earlier time than a time-stamp in the configuration data stored in the diffusion kiosk 16, then the configuration data C₀ is stale and is superceded by the configuration data stored in the diffusion kiosk 16. The device A and the diffusion kiosk 16 may exchange configuration data via the communication channel 22 and then each independently determine which set of configuration data is stale and discard the stale configuration data. Alternatively, the device A and the diffusion kiosk 16 may exchange time-stamps from their internally stored configuration data and cooperatively determine which is stale before transferring the non-stale configuration data via the communication channel 22.

If the configuration data stored internally in the diffusion kiosk 16 supercedes the configuration data C₀ stored in the device A at time t₂, then diffusion kiosk 16 provides its configuration data to the device A via the communication channel 22. Thereafter, the device A carries its new configuration data and distributes it to other encountered devices or diffusion kiosks that contain no configuration data or stale configuration data.

If the configuration data C₀ stored in the device A at time t₂ supercedes the configuration data stored internally in the diffusion kiosk 16, then the device A provides the configuration data C₀ to the diffusion kiosk 16 via the communication channel 22 and the diffusion kiosk 16 internally stores it diffuses it thereafter to other distributed devices that come into proximity and that have no configuration data or stale configuration data.

After encountering the diffusion kiosk 16, the device A proceeds along the path A and encounters the device B which is proceeding along the path B. At time t₃, the device A establishes a communication channel 24 with the device B, and then transfers its internally stored configuration data to the device B via the communication channel 24 if it supercedes any configuration data held in the device B. On the other hand, if the configuration data in the device A is superceded by the configuration data stored internally in the device B, then the device B provides its configuration data to the device A via the communication channel 24.

Thereafter, the device B moves along the path B and encounters a diffusion kiosk 18 and at time t₄ establishes a communication channel 26 to the diffusion kiosk 18. The device B transfers its internally stored configuration data to the diffusion kiosk 18 if it supercedes any configuration data held in the diffusion kiosk 18 or accepts configuration data from the diffusion kiosk 18 if its own configuration data is superceded by the configuration data stored internally in the diffusion kiosk 18.

At time t₅, the device B encounters the device C and establishes a communication channel 28 with the device C. The device B transfers its configuration data to the device C if it supercedes any configuration data held in the device C or accepts configuration data from the device C if its own configuration data is superceded by the configuration data stored internally in the device C.

The kiosks 14-18 may be positioned at selected locations within the geographic area 100 depending on the requirements of a particular application. For efficiency, the source kiosk 14 should be appropriately positioned within the geographic area 100.

For example, if the boundaries specified in the configuration data C₀ correspond to a particular city then a placement of the source kiosk 14 in that particular city is appropriate. A source kiosk centered in nearby airport may still result in configured devices reaching the particular city but not as efficiently as when a source kiosk is placed in the particular city. On the other hand a source kiosk in an airport would be more efficient for applications that require measurements to be performed in many cities. The diffusion efficiency of configuration data from source kiosks is a function of the statistical nature of the paths of the distributed devices that interact with the source kiosk.

In some embodiments, the application server 10 may use communication paths to the distributed devices 210-224 that are associated with the other functions of the distributed devices 210-224. In such embodiments the distributed devices 210-224 include mechanisms for accepting configuration data contained in a wide class of communications normally used for other purposes. For example, if the distributed devices 210-224 are capable of CDMA communications then extensions on the CDMA neighbor lists may be used to carry configuration data.

The configuration data may be co-located with services that are widely used by the distributed devices 210-224. For example, an application server may provide downloadable games, information, or other services that increase the likelihood that devices used by a particular type of user would contact a server and cause the distributed device to obtain configuration data along with a downloaded game or other service.

The technique of co-locating configuration data with a service may be adapted for specific application types. For example, user quality of service measurements may be obtained for an on-line retailer by including the measurement configuration data as part of any contact with the on-line retailer. This technique could be combined with kiosks and the diffusion behavior of the distributed devices themselves for even greater dispersal of configuration data.

Any one or more of the communication channels 20-28 may be embodied as a wireless communication link. The communication channels 20-28 may be implemented with protocols that form communication channels on the basis of physical proximity of devices, e.g. cellular, WiFi, Bluetooth, infrared, etc. Alternatively, any one or more of the communication channels 20-28 may be a wire link that involves a physical connection between a kiosk and a device or between devices.

The same device may function as a kiosk and as an application server at different times or may function as both an application server and a kiosk at the same time. A robot mail cart, for example, or a handheld device, both of which move around while staying within a defined region may be employed as a kiosk.

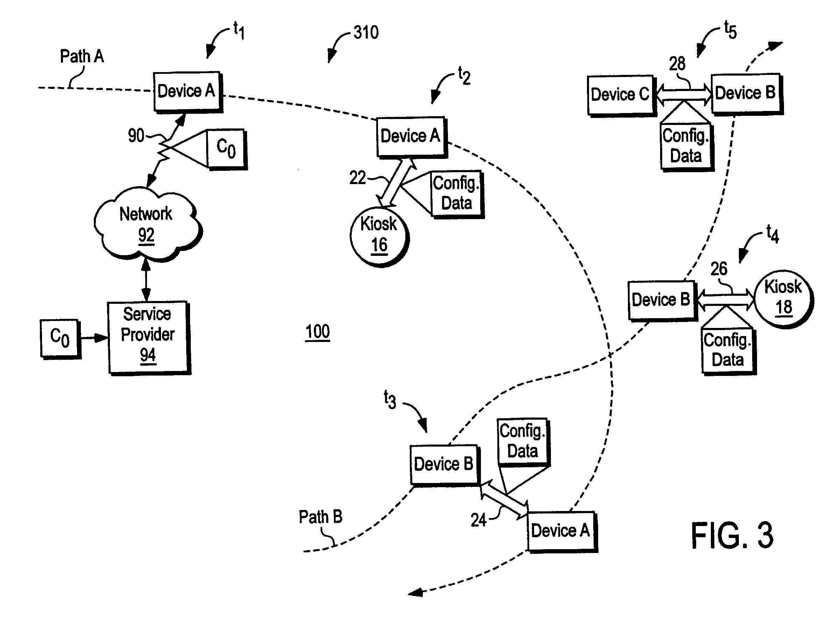

**Figure 3** illustrates an example of the diffusion of the configuration data C₀ into the measurement/control system 310 in which the configuration data source 200 is co-located with a service provider 94. In other embodiments, the configuration data source 200 may be co-located with multiple service providers.

The service provider 94 may be any type of service provider that may be accessed by the users of devices such as cell phones, PDAs, portable game/media devices, etc. Examples include online retailers, cell phone service providers, information services, etc.

Any one or more of the devices A-C may obtain the configuration data C₀ from a service provider at any time when in normal contact. For example, the device A may obtain the configuration data C₀ from the service provider 94 at time t₁ when in normal contact with the service provider 94 via a network 92. The device A may reach the network 92 via a wireless link 90. For example, the service provider 94 may download the configuration data C₀ when downloading other information to the device A, e.g. games, web pages, etc. The device A may thereafter diffuse the configuration data C₀ to other encountered devices and kiosks.

A mechanism for diffusing configuration data according to the present techniques may include any combination of source and/or diffusion kiosks and/or service providers.

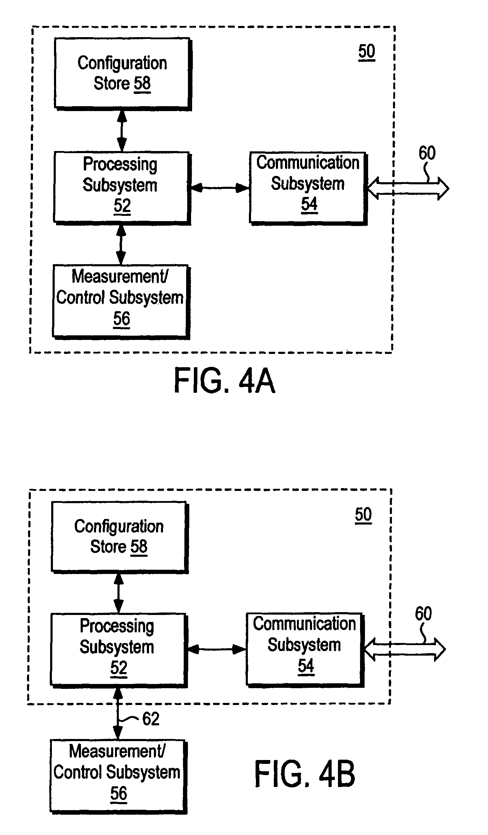

**Figures 4a-4b** illustrates a distributed device 50 that may be configured using the present techniques. The distributed device 50 includes a processing subsystem 52, a communication subsystem 54 and a configuration store 58. A measurement/control subsystem 56 may be internal to the distributed device 50 as shown in **Figure 4a** or external to the distributed device 50 as shown in **Figure 4b**. A communication path 62 to the external measurement/control subsystem 56 may be wireless or wire-based.

The communication subsystem 54 enables the formation of communication channels, e.g. a communication channel 60, with kiosks and other distributed devices. The communication channel 60 may be formed on the basis of physical proximity of kiosks or other distributed devices. For example, the communication subsystem 54 may provide short-range wireless communication, e.g. cellular, WiFi, Bluetooth, infrared, etc, or wire-based communication.

The processing subsystem 52 implements code for obtaining and distributing configuration data according to the present techniques. For example, the processing subsystem 52 may implement code for exchanging configuration data with encountered kiosk or other devices via short range communication channels and for determining staleness of configuration data, etc. In another example, the processing subsystem 52 may implement code for obtaining configuration data downloaded from a service provider, e.g. the service provider 94. The processing subsystem 52 in the embodiment shown internally stores its configuration data in the configuration store 58. The processing subsystem 52 may implement code for employing the measurement/control subsystem 56 in a measurement/control function using the configuration data in the configuration store 58.

The measurement/control subsystem 56 provides the capability of performing one or more measurement and/or control functions in response to the configuration data in the configuration store 58. For example, if the distributed device 50 is a wireless telephone, e.g. cell phone, then the measurement/control subsystem 56 may be a circuit for measuring received RF power or for transmitting an RF signal. Other examples of measurement functions that may be performed by the measurement/control subsystem 56 include environmental measurements, e.g. pressure, temperature, system measurements, e.g. signal power, response time, message delay, as well as other types of sampling, e.g. images, audio samples, etc. Examples of actuator functions that may be performed by the measurement/control subsystem 56 include generating electrical signals, performing physical motions, sending messages, etc.

The elements of the distributed device 50 shown in **Figures 4a-4b** may be contained in devices such as cell phones, PDAs, portable game and media devices, calculators etc, as well as automobiles, aircraft including drones, water buoys, etc.

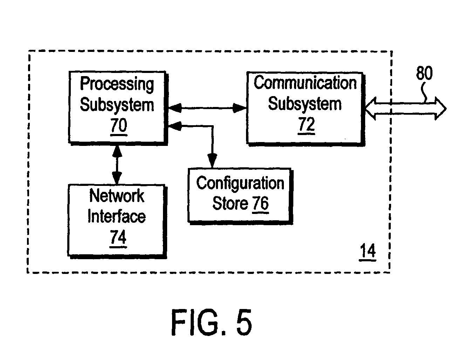

**Figure 5** illustrates elements of the source kiosk 14 in one embodiment. The source kiosk 14 includes a processing subsystem 70, a communication subsystem 72, and a network interface 74, and a configuration store 76

The processing subsystem 70 implements code for obtaining configuration data from the application server 10 and for diffusing the configuration data to distributed devices according to the present techniques. The processing subsystem 70 obtains configuration data from the application server 10 via the network interface 74. For example, the network interface 74 may provide communication via the network 12 using Internet protocols.

The communication subsystem 72 enables the formation of communication channels, e.g. a communication channel 80, with the distributed devices 210-224. The communication subsystem 72 may provide wireless communication, e.g. cellular, WiFi, Bluetooth, infrared, etc, or wire-based communication depending on a particular embodiment of the measurement/control system 310.

The configuration data C₀ includes a specification of a set of boundaries within which a measurement and/or control function is to be performed by a device. The boundaries may be spatial boundaries and/or temporal boundaries or may involve a wider set of variables pertaining to an application. The distributed device 50 may include mechanisms for measuring or accepting the values pertaining to the specified boundaries and for determining whether or not it is within the specified boundaries. For example, the distributed device 50 may include a clock for determining the time and/or a mechanism for determining its geographic location, e.g. a GPS receiver or cell site locator. In some embodiments, the distributed device 50 may obtain information pertaining to boundaries, e.g. time and/or geographic location from external devices.

The configuration data C₀ in some embodiments includes a specification of parameters that pertain to measurement, actuation, computation functions, etc. to be formed both within and without the boundaries specified in the configuration data C₀. For example, parameters such as sampling rate or what is to be measured, etc. may vary depending on whether or not the distributed device 50 is within the boundaries specified in the configuration data C₀.

The configuration data C₀ in some embodiments includes a specification of what the distributed device 50 is to report both within and without the boundaries specified in the configuration data C₀. These specifications may be time bounded, i.e. defined to hold over finite times.

The foregoing detailed description of the present invention is provided for the purposes of illustration and is not intended to be exhaustive or to limit the invention to the precise embodiment disclosed. Accordingly, the scope of the present invention is defined by the appended claims.

## Claims

1. A measurement/control system, comprising:
configuration data source (200) that provides a set of configuration data that specifies a measurement/control function;
a set of distributed devices (210-224) each having means for obtaining the configuration data from the configuration data source (200) and means for diffusing the configuration data among the distributed devices (210-224).

2. The measurement/control system of claim 1, wherein the configuration data source (200) includes a source kiosk (14) that obtains the configuration data from an application server (10).

3. The measurement/control system of claim 1, wherein the configuration data source (200) is co-located with a service provider accessible by one or more of the distributed devices (210-224).

4. The measurement/control system of any preceding claim, wherein the means for diffusing includes means for forming a communication channel with a kiosk.

5. The measurement/control system of claim 4, wherein the means for forming a communication channel includes means for forming a communication channel in response to a physical proximity to the kiosk.

6. The measurement/control system of any of claims 1 to 3, wherein the means for diffusing includes means for forming a communication channel with another of the distributed devices (210-224).

7. The measurement/control system of claim 6, wherein the means for forming a communication channel includes means for forming a communication channel in response to a physical proximity.

8. The measurement/control system of any of claims 1 to 3, wherein the means for diffusing includes means for determining a relative staleness of a set of configuration data stored in a kiosk and a set of configuration data stored in the distributed devices (210-224).

9. The measurement/control system of any of claims 1 to 3, wherein the means for diffusing includes means for determining a relative staleness of a set of configuration data stored in the distributed devices (210-224-).

10. A method for configuring a set of distributed devices (210-224), comprising the steps of:
providing to one or more of the distributed devices (210-224) a set of configuration data that specifies a measurement/control function;
diffusing the configuration data among the distributed devices (210-224).
